# FASCICULE DE BREVET EUROPEEN

(11) **EP 2 901 074 B1**
(45) Date de publication et mention de la délivrance du brevet: **18.05.2022**
(21) Numéro de dépôt: 13766035.3
(22) Date de dépôt: 20.09.2013
(51) Int. Cl.: B60Q 3/76

(54) **DISPOSITIF D'ÉCLAIRAGE ET/OU DE SIGNALISATION DE VÉHICULE AUTOMOBILE**
FAHRZEUG-SIGNALLEUCHTE ODER -INNENRAUMLEUCHTE
VEHICLE SIGNALING LIGHT OR VEHICLE INTERIOR LIGHT

(30) Priorité: 26.09.2012 FR 1259013
(43) Date de publication de la demande: 05.08.2015
(73) Titulaire: Valeo Vision, 93012 Bobigny Cedex (FR)
(72) Inventeur: SAGNA, Boubacar, F-78500 Sartrouville (FR); DE LAMBERTERIE, Antoine, F-75019 Paris (FR); TASSY, Pierre-Louis, F-92600 Asnieres Sur Seine (FR); DEBERT, Florestan, F-59310 Nomain (FR)
(74) Mandataire: Valeo Visibility
(86) Numéro de dépôt international: PCT/EP2013/069589
(87) Numéro de publication internationale: WO 2014/048848

(56) Documents cités:
- EP-A1- 1 835 224
- EP-A1- 2 338 732
- EP-A1- 2 384 934
- DE-A1- 10 338 788
- DE-A1- 10 341 103
- DE-A1- 19 756 596
- DE-A1-102008 061 716
- FR-A1- 2 853 392
- JP-A- 2012 038 424
- US-A- 5 197 792
- US-A- 5 197 792
- US-A1- 2004 130 904

## Description

L'invention concerne les dispositifs d'éclairage d'habitacle de véhicule automobile.

Il est connu de doter de tels dispositifs d'un guide de lumière et de leds dont les rayons lumineux sont acheminés par le guide jusqu'à la sortie du dispositif selon une ligne de lumière. On produit ainsi un faisceau lumineux à partir d'un guide de lumière ayant un profil linéaire, rectiligne ou courbe.

Lorsqu'il s'agit d'un plafonnier, l'épaisseur du dispositif d'éclairage est limitée par l'espace disponible entre la carrosserie et l'habitacle du véhicule. Généralement, la taille, les contraintes fonctionnelles et la disposition des éléments constitutifs du dispositif, notamment le circuit imprimé et la source lumineuse, ne permettent pas de répondre facilement aux exigences des constructeurs automobiles en termes d'épaisseur du dispositif.

Le document EP 2 384 934 décrit un dispositif d'éclairage selon le préambule de la revendication 1.

Il existe donc un besoin pour un dispositif d'éclairage qui peut être mis en oeuvre dans un encombrement réduit, ne sacrifiant pas la photométrie et sans contrainte excessive sur l'agencement des sources lumineuses.

Un but de l'invention est de produire un dispositif d'éclairage ayant une épaisseur limitée dans lequel la source lumineuse peut être librement agencée, tout en rendant possible par exemple la production d'au moins deux lignes de lumière continues et homogènes le long du profil de la ligne, qu'elles soient droites ou courbes.

A cet effet, on prévoit selon l'invention un dispositif d'éclairage d'habitacle de véhicule automobile selon la revendication1. Le dispositif d'éclairage d'habitacle de véhicule automobile comprend au moins une source de lumière et un guide de lumière, la source s'étendant en regard d'une face principale du guide, le guide comprenant au moins une face de couplage apte à réfléchir dans le guide au moins une partie de la lumière émise par la source et au moins deux faces de découplage distantes l'une de l'autre et agencées de façon à réfléchir vers une face de sortie du guide la lumière provenant de la face de couplage.

Ainsi, la disposition de la source par rapport au guide permet de réduire l'épaisseur du dispositif, tout en maintenant une bonne photométrie des lignes de lumière.

On entend notamment par « dispositif d'éclairage d'habitacle de véhicule » un dispositif d'éclairage destiné à être monté à l'intérieur de l'habitacle du véhicule et à éclairer une partie ou l'intégralité de cet habitacle, comme par exemple un plafonnier, un éclairage de console ou encore une liseuse.

On entend par « face de couplage » une surface optique agencée pour permettre aux rayons la traversant de se propager dans le guide par réflexions internes totales dans ce guide.

On entend par « face de découplage » une surface optique agencée pour permettre aux rayons couplés à l'intérieur du guide d'être réfléchis ou réfractés de manière à sortir du guide.

On peut prévoir que la source de lumière présente un axe d'émission perpendiculaire à la face principale.

On peut également prévoir que la face de couplage est disposée à l'une des extrémités du guide.

On peut prévoir que la face de couplage du guide présente une section de forme générale parabolique, de préférence la face de couplage est convexe vu de l'extérieur du guide.

Si la source se trouve au foyer de la parabole, cette forme permet aux rayons provenant de la source et réfléchis par la face de couplage d'être dirigés dans le guide selon des plans parallèles, par exemple parallèles à la face principale du guide. On peut prévoir que la face de couplage comprend au moins un relief apte à disperser la lumière émise par la source.

Cette dispersion améliore la répartition de la lumière dans l'habitacle. Les reliefs peuvent comprendre des ondulations ou des godrons.

De préférence, le guide est en matériau transparent et la face de couplage est métallisée.

Le guide peut être en verre ou bien en matériau synthétique, par exemple en PC ou en PMMA qui sont plus économiques.

Grâce à la métallisation de la face de couplage, on améliore la réflexion de la lumière provenant de la source, ainsi que le rendement de cette dernière.

On peut également prévoir que l'une des faces de découplage comprend au moins un moyen de dispersion de la lumière.

Les deux faces de découplage sont séparées par une zone de réflexion interne totale agencée de manière à ce que les rayons lumineux qui l'atteignent soient réfléchis totalement de manière à rester couplés au guide.

Ainsi les rayons lumineux sont réfléchis de manière à ce qu'ils atteignent la face de sortie avec un angle d'incidence suffisamment grand pour être de nouveau totalement réfléchis par cette face de sortie.

Ainsi, la lumière réfléchie par la face de découplage est dispersée de façon à ce qu'elle soit largement visible.

Par exemple, un moyen de dispersion de la lumière peut être formé par des godrons verticaux ou horizontaux.

De préférence, le dispositif comporte des gradins disposés en vis-à-vis de la face de sortie, ces gradins comportant les faces de découplage.

Avantageusement, les gradins sont formés par une alternance de faces de découplage et de zones de réflexion interne totale.

Avantageusement, chaque face de découplage est agencée de façon à réfléchir les rayons de lumière l'atteignant de manière à ce que des bandes lumineuses soient visibles à travers la face de sortie.

Ainsi, lorsque la source de lumière est allumée, le guide présente une pluralité de lignes lumineuses sur la face de sortie.

La disposition des faces de découplage permet de définir le motif lumineux produit par le dispositif. En effet, la forme des faces de découplage ainsi que leur agencement les unes par rapport aux autres permet de produire, par exemple, des lignes de lumière distantes les unes des autres, linéaires ou courbes, et pouvant se rejoindre.

On peut prévoir dans le dispositif que les sources sont au moins au nombre de deux et de préférence disposées dans un même plan.

On peut prévoir autant de sources que nécessaire de façon à ce que toutes les faces de découplage reçoivent de la lumière émise par les sources afin de maintenir une photométrie constante sur toutes les lignes de lumière.

De préférence, le dispositif comprend un circuit imprimé parallèle à la face principale du guide.

Cette disposition en un seul plan des sources et du circuit permet avantageusement que les sources soient branchées à un seul circuit et qu'elles soient organisées librement à la surface supérieure du circuit. De plus, cette organisation permet aux sources de dissiper sur une surface étendue (correspondant à la toute la surface supérieure du circuit) l'énergie thermique qu'elles émettent.

On peut prévoir également un cache recouvrant le circuit imprimé. Ce cache a un but essentiellement esthétique et permet de dissimuler des composants disgracieux du circuit imprimé.

On peut prévoir que le dispositif selon l'invention comprend également un cache recouvrant la face de couplage ou dans lequel la paroi externe de la face de couplage est rendue opaque.

Le guide comprend de préférence un passage pour le montage de la source à travers le guide.

Avantageusement, le guide comprend au moins une irrégularité de surface isolée telle qu'une altération superficielle, par exemple sur la face principale, sur la face de couplage, sur l'une des faces de découplage ou sur la face de sortie. Cette altération superficielle est une modification telle qu'un apport de matière, un revêtement ou une modification locale du relief de la face en question, qui peut être un bossage ou une cavité. Il peut s'agir de creux tridimensionnels parfois dénommées « microptics », dont la profondeur s'exprime par exemple en dixièmes de millimètre et, ou de « pseudo-motifs » qui sont plus des motifs surfaciques que volumiques, de très faible profondeur et dont la profondeur s'exprime plutôt en microns ou dizaines de microns. Ces irrégularités de surface isolées ont pour fonction première de disperser les rayons lumineux.

Dans un mode réalisation, la face de sortie et la face principale s'étendent sur des côtés opposés du guide.

Dans un autre mode de réalisation, la face de sortie et la face principale s'étendent sur un même côté du guide.

Selon l'invention, le dispositif comprend en outre au moins une source d'éclairage directionnel et au moins un organe de redirection qui dirige la lumière émise par la source d'éclairage directionnel vers un foyer de l'organe situé à l'extérieur du guide.

La source d'éclairage directionnel est une source distincte de la source s'étendant en regard de la face de couplage. Elle est destinée à émettre un spot de lumière et a une fonction de liseuse.

Cette liseuse est incluse avantageusement dans l'épaisseur générale du guide du faite de son architecture en escalier et garde donc la caractéristique de faible épaisseur de l'ensemble.

D'autres fonctions d'éclairage (ou d'activation) peuvent être incluses dans cette épaisseur, par exemple un éclairage de la console.

L'architecture du guide est appropriée au mélange de plusieurs sources lumineuses, notamment de couleurs différentes.

La lumière émise par la source d'éclairage directionnel est transmise par l'organe de redirection à l'intérieur du guide qu'elle traverse vers la face de sortie. Elle peut éventuellement être dispersée par une altération de surface.

Selon l'invention, l'organe de redirection est interposé entre la source d'éclairage directionnel et les faces de découplage du guide. On peut prévoir que cet organe est indépendant du guide de lumière et associé au dispositif par l'intermédiaire du circuit imprimé sur lequel il est rapporté.

De préférence, l'organe de redirection est agencé de sorte qu'il dirige une partie au moins de la lumière de la source d'éclairage directionnel vers une zone située entre deux faces de découplage.

Si la forme de la zone située entre deux faces de découplage le permet, la lumière de la source d'éclairage directionnel entre dans le guide, le traverse et en sort sans être perturbée ni réfléchie par ce dernier.

Avantageusement, l'organe de redirection a une forme générale d'ellipsoïde. Sa forme peut être agencée de façon à diriger dans la direction souhaitée la lumière émise par la source d'éclairage directionnel.

De préférence, les organes de redirection sont au moins au nombre de deux et reliés l'un à l'autre indépendamment du guide. Chacun des organes de redirection associé à une source d'éclairage directionnel respective peut former une partie d'un unique faisceau lumineux ou un faisceaux individuel indépendant.

Avantageusement, le guide présente une épaisseur variable diminuant transversalement d'une extrémité à une autre.

De préférence, le guide est dépourvu de support à l'extrémité où l'épaisseur est la plus fine.

De préférence, la source de lumière est disposée à l'extrémité où l'épaisseur est la plus grande.

Avantageusement, le guide est supporté dans le dispositif par des moyens de maintien disposés au niveau de l'extrémité où l'épaisseur est la plus grande. Le circuit imprimé peut servir également à au moins une autre fonction technique, par exemple, à une commande d'ouverture électronique de porte.

Nous allons décrire par la suite, à titre d'exemples non limitatifs et à l'appui des dessins annexés, un mode de réalisation de l'invention et des variantes :
- la figure 1 est une vue en coupe d'un élément du dispositif d'éclairage selon l'invention, réalisé selon un mode de réalisation préféré;
- la figure 2 est une vue en coupe de l'élément de la figure 1 montrant le trajet des rayons lumineux ;
- la figure 3 est une vue analogue à la figure 1 montrant la disposition des faces de découplage ;
- la figure 4 est une photographie de face d'un motif lumineux produit par l'élément du dispositif d'éclairage selon l'invention ;
- la figure 5 est une vue en plan du dispositif montrant la disposition des sources lumineuses ;
- la figure 6 est une vue en coupe de l'élément du dispositif d'éclairage présentant un cache recouvrant la face de couplage ainsi qu'un autre cache recouvrant le circuit imprimé ;
- la figure 7 est une vue en coupe du dispositif d'éclairage selon l'invention comprenant l'élément de la figure 1 et une liseuse ;
- la figure 8A et 8B sont des représentations schématiques du trajet des rayons lumineux de la liseuse du dispositif de la figue 7 ;
- les figures 9, 10 (A et B), 11 (A, B et C) et 12 sont des représentations schématiques de variantes du dispositif de la figure 7 ;
- la figure 13 est une vue en coupe d'une variante de réalisation d'un élément du dispositif d'éclairage selon l'invention, comprenant un passage facilitant l'insertion de la source lumineuse ;
- la figure 14 est une vue en perspective de la face de couplage du guide de lumière ; et
- la figure 15 est une vue en coupe d'un élément du dispositif d'éclairage selon l'invention, réalisé selon un second mode de réalisation.

L'invention est applicable à des dispositifs d'éclairage, de l'habitacle d'un véhicule automobile, par exemple à un plafonnier.

On considère un repère orthogonal X, Y, Z dans lequel la direction Z correspond à l'axe vertical du véhicule et Y et X sont des axes horizontaux, avec X correspondant à la direction de marche du véhicule. Le dispositif 2 comprend un guide de lumière 4 et des sources de lumière 6.

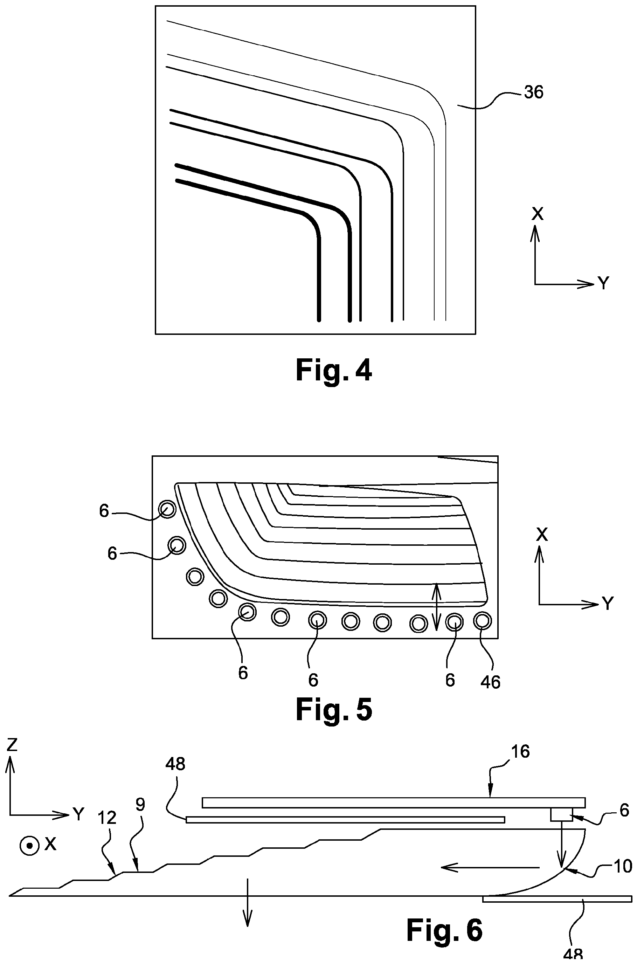

Chaque source 6 a son axe principal parallèle à la direction Z et perpendiculaire au plan général du guide. Elle s'étend en regard d'une face 8 de ce dernier de façon à ce que la lumière émise par la source y entre par cette face. Chaque source est par exemple constituée d'une ou de plusieurs leds. Le dispositif 2 comprend un circuit imprimé plan 16 parallèle aux directions X et Y et qui porte les sources de sorte qu'elles sont situées dans un même plan. Les sources 6 sont disposées sur le pourtour du guide en regard de la face 8. On observe sur la figure 5 que les sources forment une ligne courbe. Sur cette figure, la position des sources a été décalée par rapport au guide pour les rendre visibles. Cette disposition des sources permet de produire des lignes comme expliqué plus loin.

Le guide de lumière forme ici une seule pièce pleine s'étendant dans sa longueur selon Y et dans sa hauteur selon Z. Il est réalisé par moulage de préférence d'une matière plastique transparente, par exemple de PMMA d'indice de réfraction de 1,49 ou de polycarbonate d'indice de réfraction de 1,59.

Il peut également être en PC, matériau qui favoriserait le placement du guide en pièce externe sans la nécessité d'un écran de protection supplémentaire. Il comprend deux faces principales de forme générale plane, parallèles entre elles et au plan X, Y et qui s'étendent sur des côtés opposés du guide. Elles forment respectivement la face supérieure 8 d'entrée de la lumière, dirigée vers la carrosserie, et la face inférieure 14 de sortie de la lumière orientée vers l'habitacle du véhicule.

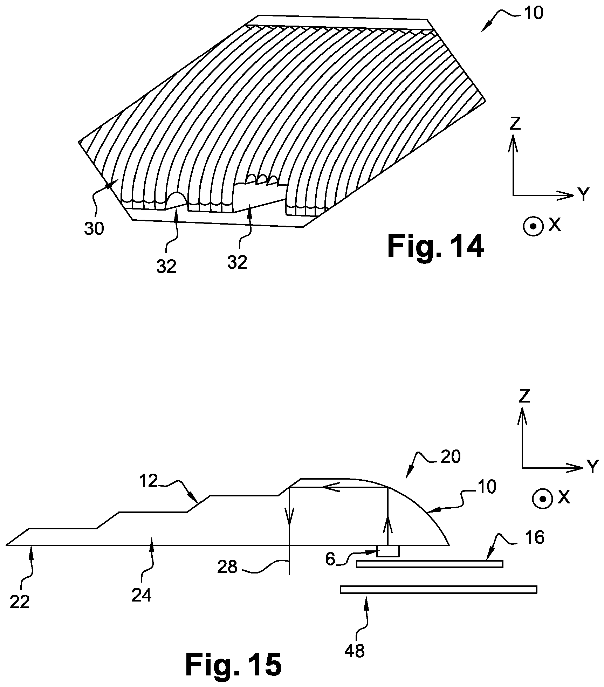

Le guide comprend en outre une face 10 qui présente des sections de forme parabolique. Ces sections sont parallèles à la direction X. Cependant, elles ne sont pas toutes parallèles entre elles. Elles sont orientées de sorte que chaque section du guide parallèle à la direction X et passant par une des sources 6 soit parabolique. La source est située au foyer de la parabole correspondante. La face 10 réfléchit à l'intérieur du guide au moins une partie de la lumière provenant de chaque source via la face principale8. Les rayons ainsi réfléchis sont situés dans des plans parallèles aux directions X et Y. Cette face présente une série de reliefs 30 tels que des godrons illustrés à la figure 14. Les godrons 30 sont bombés vers l'extérieur du guide et dispersent les rayons dans chaque plan X, Y.

Le guide comprend des faces de découplage 12 distantes les unes des autres et qui réfléchissent chacune indépendamment les unes des autres une partie de la lumière provenant directement de la face 10, directement vers la face de sortie 14. Les faces de découplage sont en l'espèce au nombre de huit. Ce chiffre n'est pas limitatif de sorte qu'il peut être inférieur ou supérieur à cette valeur.

Compte tenu de la disposition des sources 6 dans le présent exemple, les faces de découplage 12 ne sont pas planes. Elles présentent un profil rectiligne dans chacune des sections précitées. Ce tronçon rectiligne est incliné par rapport au plan de la face 8 ou 9 selon un angle α compris entre 1 et 89°, avantageusement compris entre 25 à 75° et de préférence compris entre 35 et 65°. Il est ici égal à 45°. Les faces de découplage sont organisées en gradins, c'est-à-dire selon une alternance de faces de découplage et de faces planes 9 parallèles aux axes X et Y.

En outre, les faces de découplage 12 présentent des reliefs 26 tels que des godrons. Elles peuvent présenter également tout autre relief permettant de disperser la lumière à l'extérieur du guide.

Bien que la face de sortie 14 présente en l'espèce une forme plane, on pourra y ajouter des éléments permettant la dispersion de la lumière ou lui donner une forme courbe. Il en est de même pour la face principale8. La figure 14 illustre deux passages 32 traversant la paroi du guide et les faces 10 et 8 et permettant le montage des sources dans le dispositif lorsque le guide est déjà en place en regard du circuit imprimé. Ils sont découpés dans la matière en des formes variées selon les axes X et Y tel que par exemple des puits. Ils n'ont cependant aucun impact sur la mise en oeuvre du dispositif.

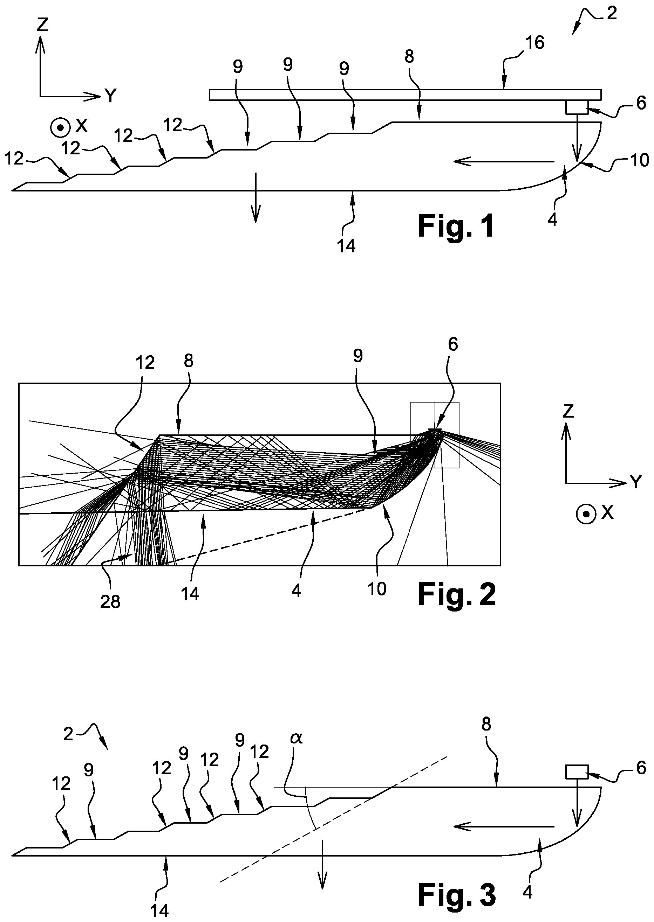

Le trajet de la lumière émise par chaque source à l'intérieur du guide est représenté à la figure 2 et matérialisé par les rayons 28. Les rayons 28 émis par la source 6 se propagent dans le guide au travers de la face principale 8, vers la face de couplage 10 qui les réfléchit à l'intérieur du guide selon des plans X, Y parallèles à la face 8. Ces rayons se propagent dans le guide 4 jusqu'à ce qu'ils soient réfléchis par les faces de découplage 12 vers la face de sortie 14 afin qu'ils soient largement visibles depuis l'extérieur.

Le guide peut former en l'espèce un motif lumineux illustré à la figure 4 comprenant des lignes de lumière 36 s'étendant sur la face de sortie 14 en corrélation avec le positionnement des faces de découplage 12. Les lignes de lumière peuvent être droites ou courbes et peuvent se rejoindre ou pas.

Dans cette figure, le motif est constitué de sept lignes de lumière à des distances variables les unes des autres présentant également des segments droits et une portion courbe en partie médiane. La photométrie est homogène à l'intérieur des lignes. Le motif lumineux formé par le guide n'est pas limitée au seul motif représenté en figure 4. Le guide peut produire d'autres motifs.

Le dispositif comprend un cache 48 permettant de rendre invisible le circuit imprimé 16. Ce cache a un rôle essentiellement esthétique en permettant de dissimuler les parties disgracieuses du circuit ainsi que d'éventuels autres composants électriques présents.

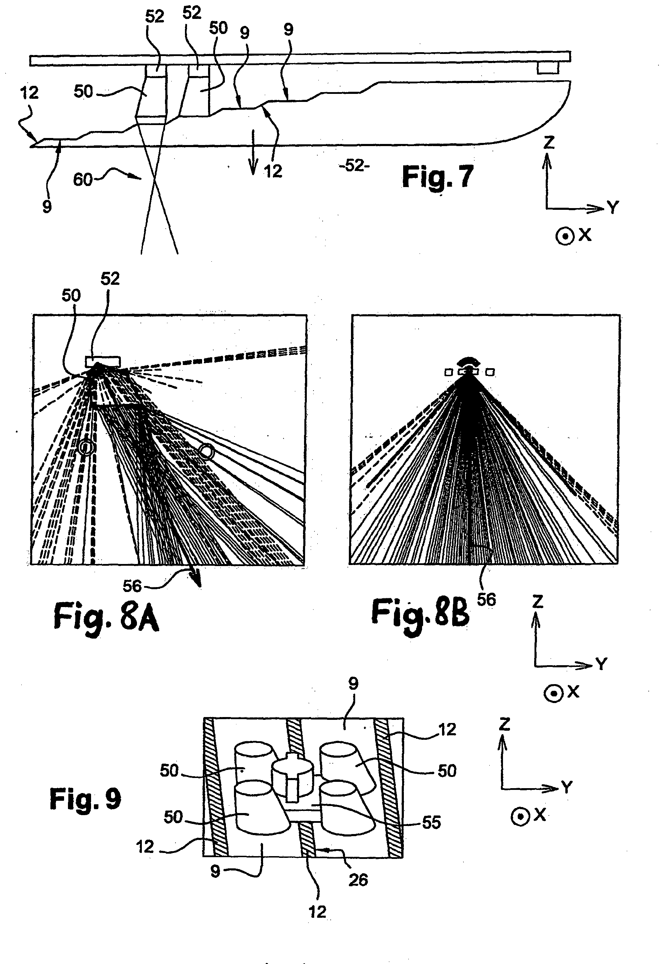

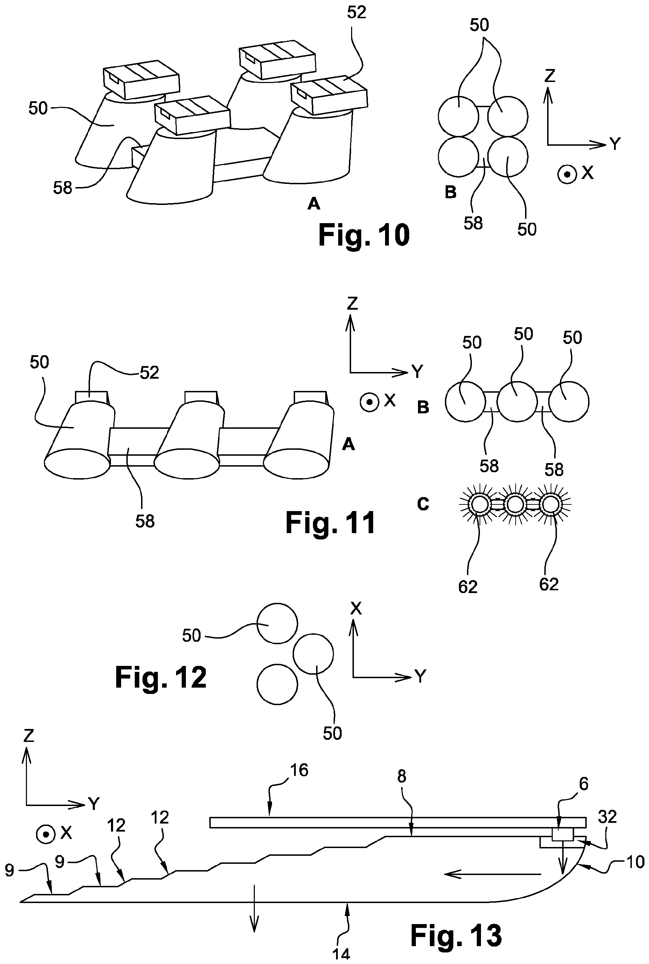

En référence à la figure 7, le dispositif comprend en outre des source d'éclairage directionnel 52 et, pour chacune d'elles, un organe respectif de redirection 50 de la lumière apte à diriger la lumière émise par cette source vers un foyer 60 de l'organe situé à l'extérieur du guide et représenté schématiquement à la figure 11. En l'espèce, le dispositif comprend en l'espèce deux sources de ce type. Ce nombre n'est pas limitatif et peut être inférieur ou supérieur. Il est de préférence compris entre 1 et 4. Ces sources sont au nombre de trois sur les figures 11 et 12 et de quatre sur les figures 9 et 10 qui illustrent des variantes de réalisation.

Les sources 52 sont portées par le circuit imprimé 16 et orientées avec leur axe principal parallèle à la direction Z. Ces sources sont positionnées, dans leur majeure partie ou dans leur totalité, en regard de faces planes 9 du guide, entre deux faces de découplage 12. Elles peuvent être disposées librement. Par exemple, elles peuvent être alignées, disposées en carré, en cercle ou encore en triangle tel que représenté en figure 11. Chaque organe de redirection 50 a une forme générale d'ellipsoïde pouvant présenter une inclinaison de son axe principal par rapport aux directions Z et Y, tel que représenté à la figure 7.

Il est disposé entre le circuit imprimé et le guide de lumière. De préférence, l'organe de redirection est indépendant du guide et fixé au circuit imprimé.

Cet organe réfléchit une partie des rayons provenant de la source vers le foyer 60 de l'organe qui est situé à l'extérieur du guide. La direction principale des rayons est matérialisée par la flèche 56. Lorsque le dispositif présente plusieurs organes 50, ils peuvent être fixés les uns aux autres par un moyen 58 qui permet leur maintien ensemble au circuit imprimé ou encore sont formés d'une seule pièce avec ce moyen.

Les sources 50 permettent d'obtenir un ou plusieurs spots de lumière 62.

Les sources et organes peuvent être organisés de sorte à générer un spot unique de lumière ou de sorte à produire autant de spots de lumière que de sources d'éclairage directionnel et d'organes de redirection présents.

Dans le mode de réalisation illustré à la figure 15, le dispositif 20 diffère de celui de la figure 1 par le fait que la face principale de la lumière 22 et la face de sortie de la lumière 22 s'étendent sur le même côté du guide et forment de préférence une seule et même face.

De plus, les faces de découplage, à nouveau disposées en gradins, s'étendent en regard de la face de sortie sur le côté opposé du guide. Le circuit imprimé 16 est disposé à une extrémité du guide en regard de la face 22 et jusqu'à une zone limite correspondant à la zone d'émission du motif lumineux. Les autres aspects du dispositif sont inchangés. Les rayons 28 émis par la source 6 se propagent dans le guide au travers de la face principale 22, vers la face de couplage 10 qui les réfléchit à l'intérieur du guide selon des plans sensiblement parallèles à la face 22. Ces rayons sont réfléchis par les faces de découplage 12 vers la face de sortie du guide 22.

Le dispositif peut également comprendre un cache 48 à but esthétique afin de dissimuler les composants du circuit imprimé.

Une ou plusieurs liseuses telles que définies ci-avant sont ajoutées à ce mode de réalisation .

Bien entendu, on pourra apporter à l'invention de nombreuses modifications sans sortir du cadre de celle-ci, qui est défini pas les revendications suivantes.

## Revendications

1. Dispositif d'éclairage d'habitacle de véhicule automobile, le dispositif d'éclairage comprenant au moins une source de lumière (6) et un guide de lumière (4 ; 24), la source (6) s'étendant en regard d'une face principale du guide (8 ; 22), le guide comprenant au moins une face de couplage (10) apte à réfléchir dans le guide au moins une partie de la lumière émise par la source, et au moins deux faces de découplage (12) distantes l'une de l'autre et agencées de façon à réfléchir vers une face de sortie (14 ; 22) du guide la lumière provenant de la face de couplage, le dispositif d'éclairage comprend en outre au moins une source d'éclairage directionnel (52) et au moins un organe de redirection (50), ledit organe de redirection (50) étant interposé entre la source d'éclairage directionnel (52) et les faces de découplage (12) du guide (4 ; 24) et agencé de manière à transmettre la lumière émis par ladite source d'éclairage directionnel à l'intérieur du guide qu'elle traverse vers la face de sortie (14; 22), **caractérisé en ce que** l'organe de redirection (50) dirige la lumière émise par la source d'éclairage directionnel vers un foyer (60) de l'organe situé à l'extérieur du guide.

2. Dispositif selon la revendication précédente, dans lequel la source de lumière présente un axe d'émission perpendiculaire à la face principale.

3. Dispositif selon l'une quelconque des revendications précédentes, dans lequel la face de couplage est disposée à l'une des extrémités du guide.

4. Dispositif selon l'une quelconque des revendications 1 à 3, dans lequel la face de couplage (10) présente une section de forme générale parabolique.

5. Dispositif selon l'une quelconque des revendications 1 à 4, dans lequel la face de couplage comprend au moins un relief (30) apte à disperser la lumière émise par la source.

6. Dispositif selon l'une quelconque des revendications 1 à 5, dans lequel au moins l'une des faces de découplage (12) comprend au moins un moyen (26) de dispersion de la lumière.

7. Dispositif selon l'une quelconque des revendications 1 à 6, dans lequel les au moins deux faces de découplage sont séparées par une zone de réflexion interne totale agencée de manière à ce que les rayons lumineux qui l'atteignent soient réfléchis totalement de manière à rester couplés au guide.

8. Dispositif selon l'une quelconque des revendications 1 à 7, comportant des gradins disposés en vis-à-vis de la face de sortie (14), ces gradins comportant les faces de découplage (12).

9. Dispositif selon l'une quelconque des revendications 1 à 8, dans lequel les gradins sont formés par une alternance de faces de découplage et de zones de réflexion interne totale.

10. Dispositif selon l'une quelconque des revendications 1 à 9, dans lequel chaque face de découplage (12) est agencée de façon à réfléchir les rayons de lumière l'atteignant de manière à ce que des bandes soient visibles à travers la face de sortie.

11. Dispositif selon l'une quelconque des revendications 1 à 10, qui comprend un circuit imprimé (16) parallèle à la face principale du guide.

12. Dispositif selon l'une quelconque des revendications 1 à 11, dans lequel le guide comprend un passage (32) pour le montage de la source (6) à travers le guide.

13. Dispositif selon l'une quelconque des revendications 1 à 12, dans lequel le guide comprend au moins une irrégularité de surface isolée telle qu'une altération superficielle, par exemple sur la face principale, sur la face de couplage, sur une des faces de découplage ou sur la face de sortie.

14. Dispositif selon l'une quelconque des revendications 1 à 13, dans lequel la face de sortie (14) et la face principale (8) s'étendent sur des côtés opposés du guide.

15. Dispositif selon l'une quelconque des revendications 1 à 14, dans lequel la face de sortie (22) et la face principale (22) s'étendent sur un même côté du guide.

16. Dispositif selon l'une des revendications 1 à 15, dans lequel l'organe de redirection (50) est agencé de sorte qu'il dirige une partie au moins de la lumière de la source d'éclairage directionnel (52) vers une zone située entre deux faces de découplage.

17. Dispositif selon l'une des revendications 1 à 16, le guide présentant une épaisseur variable diminuant transversalement d'une extrémité à une autre.

18. Dispositif selon la revendication précédente, le guide étant dépourvu de support à l'extrémité où l'épaisseur est la plus fine.

## Patentansprüche

1. Beleuchtungsvorrichtung einer Fahrgastzelle eines Kraftfahrzeugs, wobei die Beleuchtungsvorrichtung mindestens eine Lichtquelle (6) und einen Lichtleiter (4; 24) beinhaltet, wobei sich die Quelle (6) gegenüber einer Hauptfläche des Leiters (8; 22) erstreckt, wobei der Leiter mindestens eine Einkopplungsfläche (10), die dazu fähig ist, mindestens einen Teil des von der Quelle emittierten Lichts in den Leiter zu reflektieren, und mindestens zwei Auskopplungsflächen (12) beinhaltet, die voneinander beabstandet sind und so angeordnet sind, dass sie das Licht, das von der Einkopplungsfläche kommt, zu einer Austrittsfläche (14; 22) des Leiters reflektieren, wobei die Beleuchtungsvorrichtung ferner mindestens eine gerichtete Beleuchtungsquelle (52) und mindestens ein Umleitungsorgan (50) beinhaltet, wobei das Umleitungsorgan (50) zwischen der gerichteten Beleuchtungsquelle (52) und den Auskopplungsflächen (12) des Leiters (4; 24) eingefügt ist und so angeordnet ist, dass es das von der gerichteten Beleuchtungsquelle emittierte Licht in das Innere des Leiters überträgt, welchen es zu der Austrittsfläche (14; 22) hin durchquert, **dadurch gekennzeichnet, dass** das Umleitungsorgan (50) das von der gerichteten Beleuchtungsquelle emittierte Licht zu einem Brennpunkt (60) des Organs lenkt, der sich außerhalb des Leiters befindet.

2. Vorrichtung nach dem vorhergehenden Anspruch, wobei die Lichtquelle eine Emissionsachse aufweist, die zu der Hauptfläche senkrecht ist.

3. Vorrichtung nach einem der vorhergehenden Ansprüche, wobei die Einkopplungsfläche an einem der Enden des Leiters angeordnet ist.

4. Vorrichtung nach einem der Ansprüche 1 bis 3, wobei die Einkopplungsfläche (10) einen im Wesentlichen parabolischen Querschnitt aufweist.

5. Vorrichtung nach einem der Ansprüche 1 bis 4, wobei die Einkopplungsfläche mindestens ein Relief (30) beinhaltet, das dazu fähig ist, das von der Quelle emittierte Licht zu streuen.

6. Vorrichtung nach einem der Ansprüche 1 bis 5, wobei mindestens eine der Auskopplungsflächen (12) mindestens ein Mittel (26) zum Streuen des Lichts beinhaltet.

7. Vorrichtung nach einem der Ansprüche 1 bis 6, wobei die mindestens zwei Auskopplungsflächen durch einen Bereich interner Totalreflexion voneinander getrennt sind, sodass die Lichtstrahlen, die diesen erreichen, total reflektiert werden, sodass sie in dem Leiter eingekoppelt bleiben.

8. Vorrichtung nach einem der Ansprüche 1 bis 7, die Stufen umfasst, die gegenüber der Austrittsfläche (14) angeordnet sind, wobei diese Stufen die Auskopplungsflächen (12) umfassen.

9. Vorrichtung nach einem der Ansprüche 1 bis 8, wobei die Stufen aus einem Wechsel zwischen Auskopplungsflächen und Bereichen interner Totalreflexion gebildet sind.

10. Vorrichtung nach einem der Ansprüche 1 bis 9, wobei jede Auskopplungsfläche (12) so angeordnet ist, dass sie die Lichtstrahlen, die sie erreichen, so reflektiert, dass durch die Austrittsfläche hindurch Streifen sichtbar sind.

11. Vorrichtung nach einem der Ansprüche 1 bis 10, die eine Leiterplatte (16) beinhaltet, die zu der Hauptfläche des Leiters parallel ist.

12. Vorrichtung nach einem der Ansprüche 1 bis 11, wobei der Leiter einen Durchgang (32) für die Montage der Quelle (6) durch den Leiter hindurch beinhaltet.

13. Vorrichtung nach einem der Ansprüche 1 bis 12, wobei der Leiter mindestens eine vereinzelte Oberflächenunregelmäßigkeit beinhaltet, wie etwa eine Veränderung der Oberfläche, beispielsweise auf der Hauptfläche, auf der Einkopplungsfläche, auf einer der Auskopplungsflächen oder auf der Austrittsfläche.

14. Vorrichtung nach einem der Ansprüche 1 bis 13, wobei sich die Austrittsfläche (14) und die Hauptfläche (8) auf gegenüberliegenden Seiten des Leiters erstrecken.

15. Vorrichtung nach einem der Ansprüche 1 bis 14, wobei sich die Austrittsfläche (22) und die Hauptfläche (22) auf einer gleichen Seite des Leiters erstrecken.

16. Vorrichtung nach einem der Ansprüche 1 bis 15, wobei das Umleitungsorgan (50) so angeordnet ist, dass es mindestens einen Teil des Lichts der gerichteten Beleuchtungsquelle (52) zu einem Bereich lenkt, der sich zwischen zwei Auskopplungsflächen befindet.

17. Vorrichtung nach einem der Ansprüche 1 bis 16, wobei der Leiter eine variable Dicke aufweist, die in Querrichtung von einem Ende zum anderen abnimmt.

18. Vorrichtung nach dem vorhergehenden Anspruch, wobei der Leiter an dem Ende, an dem die Dicke am geringsten ist, frei von Halterungen ist.

## Claims

1. A device for passenger compartment lighting of a motor vehicle, the device comprising at least one light source (6) and a light guide (4; 24),
the source (6) extending in front of a main face of the guide (8; 22),
the guide comprising at least one coupling face (10) capable of reflecting into the guide at least a part of the light emitted by the source, and at least two decoupling faces (12) at a distance from one another and arranged so as to reflect toward an output face (14; 22) of the guide the light coming from the coupling face,
the device furthermore comprising at least one directional lighting source (52) and at least one redirection component (50), said redirection component (50) being interposed between the directional lighting source (52) and the decoupling faces (12) of the guide (4, 24), and being arranged so as to transmit the light emitted by said directional lighting source (52) inside the guide which it passes through towards the output face (14; 22)
**characterized in that** the redirection component (50) directs the light emitted by the directional lighting source to a focus (60) of the component, located outside the guide.

2. The device as claimed in the preceding claim, wherein the light source has an emission axis perpendicular to the main face.

3. The device as claimed in either one of the preceding claims, wherein the coupling face is arranged at one of the ends of the guide.

4. The device as claimed in any one of claims 1 to 3, wherein the coupling face (10) has a parabolic overall cross section.

5. The device as claimed in any one of claims 1 to 4, wherein the coupling face comprises at least one relief (30) capable of dispersing the light emitted by the source.

6. The device as claimed in any one of claims 1 to 5, wherein at least one of the decoupling faces (12) comprises at least one means (26) for dispersing light.

7. The device as claimed in any one of claims 1 to 6, wherein the at least two decoupling faces are separated by a total internal reflection zone arranged so that the light rays that reach it are totally reflected so as to remain coupled to the guide.

8. The device as claimed in any one of claims 1 to 7, comprising steps arranged in front of the output face (14), these steps comprising the decoupling faces (12).

9. The device as claimed in any one of claims 1 to 8, wherein the steps are formed by an alternation of decoupling faces and total internal reflection zones.

10. The device as claimed in any one of claims 1 to 9, wherein each decoupling face (12) is arranged so as to reflect the light rays reaching it, in such a way that bands are visible through the output face.

11. The device as claimed in any one of claims 1 to 10, which comprises a printed circuit (16) parallel to the main face of the guide.

12. The device as claimed in any one of claims 1 to 11, wherein the guide comprises a passage (32) for mounting the source (6) through the guide.

13. The device as claimed in any one of claims 1 to 12, wherein the guide comprises at least one isolated surface irregularity such as a surface alteration, for example on the main face, on the coupling face, on one of the decoupling faces or on the output face.

14. The device as claimed in any one of claims 1 to 13, wherein the output face (14) and the main face (8) extend on opposite sides of the guide.

15. The device as claimed in any one of claims 1 to 14, wherein the output face (22) and the main face (22) extend on the same side of the guide.

16. The device as claimed in any one of claims 1 to 15, wherein the redirection component (50) is arranged in such a way that it directs at least a part of the light of the directional lighting source (52) toward a zone located between two decoupling faces.

17. The device as claimed in one of claims 1 to 16, the guide having a variable thickness decreasing transversely from one end to the other.

18. The device as claimed in the preceding claim, the guide not having a support at the end where the thickness is smallest.
